# EUROPEAN PATENT APPLICATION

(11) **EP 1 034 870 A2**
(43) Date of publication of application: **13.09.2000**
(21) Application number: 00301895.9
(22) Date of filing: 08.03.2000
(51) Int. Cl.: B23D 61/02, B27B 5/32

(54) **Saw blade and mounting device for same**

(30) Priority: 08.03.1999 US 264508
(71) Applicant: Black & Decker Inc., Newark Delaware 19711 (US)
(72) Inventor: Dibbern, John E., Road Street, Maryland 21154 (US); Krout, Daniel L., New Freedom, Pennsylvania 17349 (US)
(74) Representative: Dlugosz, Anthony Charles

(57) **Abstract**

A power tool including a motor, an arbor (11) driven by the motor, a blade (10) disposed on the arbor and having a rotational axis, the blade further having a hole (10H), first and second clamps (13,18) connected to the arbor and clamping the blade, at least one of the first and second clamps and arbor have a drive surface (15) for contacting at least part of the arbor hole perimeter, the drive surface having a different shape than the hole, the drive surface having a segment (251,253), which in a first position does not contact a segment (151,153) of the hole, and which in a second position upon rotation of the arbor, contacts a substantial length of the segment of the hole. Also disclosed is a blade (10) having a rotational axis including a main body, a hole (10H) formed within the main body for receiving a drive surface (15), wherein the drive surface has a different shape than the hole, and a segment (251,253), which in a first position does not contact a segment (151,153) of the hole, and which in a second position upon rotation of the drive surface contacts a substantial length of the segment of the hole.

## Description

This invention relates generally to saw blades for tools and to mounting devices for the saw blades.

Circular saw blades in power tools are normally driven by rotating shafts connected to motors. In many applications, the rotating cutting blades have circular holes through the center for acceptance of a circular drive shaft, or arbor. The shafts often have a smaller diameter mounting portion which extends from a larger primary portion of the drive shaft to form a shoulder. The blades are typically placed over the smaller diameter mounting portion until they are stopped against the shoulder formed by the main drive portion of the shaft. The blade is then locked on to the shaft by clamping it between the shoulder on the main portion of the drive shaft and either a threaded locking nut which is threaded onto the end of the small diameter mounting portion (see, e.g., US Patent Nos. 5,477,845 and 5,303,688) or a bolt threaded into a threaded hole in the end of the shaft (see, e.g., US Patent No. 5,303,688). The blade then rotates with the shaft because of the friction from the clamping force.

Sometimes, material is allowed to enter the hole in which the clamping bolt is threaded. This prevents the bolt from being tightened sufficiently into the threaded hole in the shaft. When this occurs, there is an insufficient clamping force to hold the rotating cutting blade against the shoulder, and because the mounting is circular, the blade may slip. When the blade slips with respect to the shaft, the blade does not cut the workpiece.

In order to remedy this problem, non-circular arbor sleeves, or cutting blade mounting members, can be attached to the drive shafts. The arbor sleeves are normally securely mounted to the drive shaft, so they do not rotate. The cutting blade is configured to have a mounting hole of the same size and shape of the arbor to allow it to be positioned over the arbor to be positively driven by the motor drive shaft. Accordingly, when a non-circular arbor sleeve is employed, the cutting blade may not slip, as the hole of the blade and the outside of the arbor sleeve have sides which contact one another.

It is thus desirable according to the present state of the art to have a blade hole that matches the outside of the arbor sleeve as closely as possible. Accordingly, the blade hole is typically laser cut or machined so as to match the outside of the arbor sleeve, so that the arbor sleeve will contact the entire periphery of the blade hole. This approach is problematic, however, because of the tolerances and capabilities of such hole-making methods.

For example, persons skilled in the art may design an arrangement including a flat surface on the blade hole to contact a flat surface on the outside of the arbor sleeve. Due to tolerance issues, however, the flat surface on either the blade hole or the arbor sleeve may not be completely flat, or may be misaligned. Accordingly, if the blade is dissected along parallel planes substantially perpendicular to the axis of rotation and each being a point wide, upon rotation of the arbor, the rotating force will be applied to a single point of the blade hole, which could cause stripping of the blade hole or the arbor sleeve. Just as when a wrench cannot turn a stripped nut, the arbor will not turn a stripped blade hole.

In accordance with the present invention, an improved power tool is employed. The power tool includes a motor, an arbor driven by the motor, a blade disposed on the arbor and having a rotational axis, the blade further having a hole, first and second clamps connected to the arbor and clamping the blade, at least one of the first and second clamps and arbor have a drive surface for contacting at least part of the arbor hole perimeter, the drive surface having a different shape than the hole, the drive surface having a segment, which in a first position does not contact a segment of the hole, and which in a second position upon rotation of the arbor, contacts a substantial length of the segment of the hole.

Also disclosed is a blade having a rotational axis including a main body, a hole formed within the main body for receiving a drive surface, wherein the drive surface has a different shape than the hole, and a segment, which in a first position does not contact a segment of the hole, and which in a second position upon rotation of the drive surface contacts a substantial length of the segment of the hole.

Further disclosed is a drive mechanism for driving a blade having a rotational axis, the blade further having a hole, the drive mechanism including a main body, a drive surface on the main body for contacting a perimeter of the hole, and having a different shape than the hole, the drive surface further having a segment, which in a first position does not contact a segment of the hole, and which in a second position upon rotation of the drive surface contacts a substantial length of the segment of the hole.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is an exploded perspective view of the arbor, saw blade and mounting device according to a first embodiment of the present invention;
FIG. 2 is a side view of the mounting device of FIG. 1;
FIG. 3 is a partial side view of the blade of FIG. 1;
FIG. 4 is a partial side view of the blade and mounting device of FIG. 1 in a first rotational position;
FIG. 5 is a partial side view of the blade and mounting device of FIG. 1 in a second rotational position;
FIG. 6 is a side view of a mounting device according to a second embodiment of the present invention;
FIG. 7 is a partial side view of a blade according to the second embodiment of the present invention; and
FIG. 8 is a partial side view of a third embodiment of a blade and mounting device according to the present invention.

The invention is now described with reference to the accompanying figures, wherein like numerals designate like parts. Persons skilled in the art will recognize that the following invention can be used in any power or hand tool using a circular blade, abrasive wheel or other rotational cuffing tools. These tools include miter saws, table saws, circular saws, drills, etc.

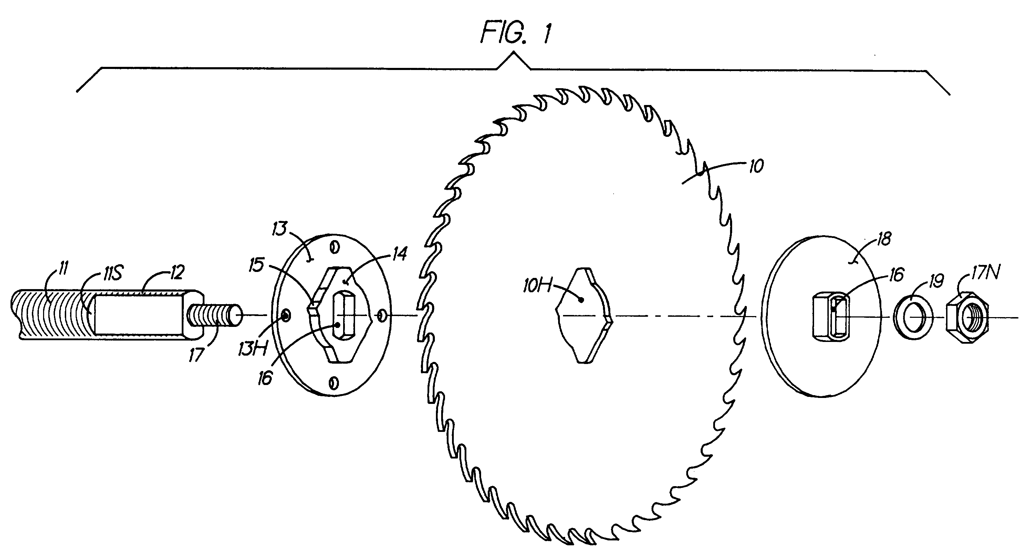

Referring to FIG. 1, an arbor 11 is rotated by a motor (not shown) about the longitudinal axis of the arbor 11. The arbor 11 has a free end for acceptance of a cuffing tool, such as blade 10. Blade 10 is preferably held on arbor 11 by a mounting device, such as blade clamp 13, which may be formed integrally with or disposed on arbor 11. Blade clamp 13 preferably contacts blade 10 on one side. A second mounting device, such as blade clamp 18, may be disposed on the other side of blade 10. Blade clamps 13, 18 preferably cooperate as a coacting clamp assembly adapted to connect blade 10 to the arbor 11. Preferably both blade clamps 13, 18 have a double-D hole for receiving a double-D-shaped extension 12 of arbor 11.

The free end of the arbor 11 may have a smaller threaded shaft 17 extending longitudinally. The blade clamps 13, 18 and blade 10 are held between a shoulder 11S on arbor 11, and a nut 17N threadingly disposed on shaft 17. A washer 19 may be disposed between nut 17N and the blade clamp nearest to the nut 17N. Persons skilled in the art should recognize that the blade 10 may be held in place by a screw bolted into arbor 11, as known in the prior art and shown in FIG. 9 of US Patent No. 5,303,688, which is hereby incorporated in its entirety by reference.

Blade clamp 13 may have holes 13H to engage a spindle lock mechanism, as is well known in the art.

Referring to FIGS. 1-3, blade 10 has a blade hole 10H for receiving at least one of the blade clamps and/or arbor 11. In order to drive the blade 10, the arbor 11 and/or blade clamps 13,18 have a drive surface 15 to contact at least part of the perimeter of the blade hole 10H. As shown in FIGS. 1-2, blade clamp 13 has a raised surface 14 that defines a drive surface 15. Persons skilled in the art should recognize that the drive surface 15 can be disposed on arbor 11 and/or at least one of blade clamps 13, 18. In other words, drive surface 15 may be disposed on both blade clamps 13, 18.

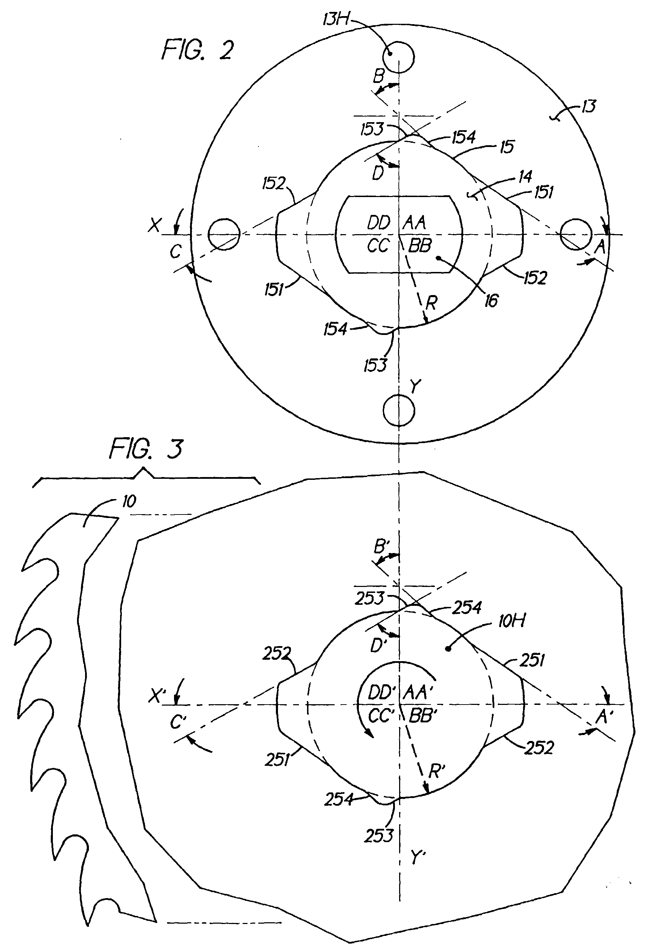

Preferably, the drive surface 15 does not exactly match the perimeter of blade hole 10H. Accordingly, the drive surface 15 will not contact the entire perimeter of blade hole 10H. As shown in FIG. 2, the drive surface 15 may have a substantially circular perimeter having a radius R, with "wing" extensions extending therefrom. The extensions preferably have linear or flat surfaces. The angles of these flat surfaces can be measured in several different manners. For example, two imaginary lines perpendicular to each other may be drawn to divide the blade clamp 13 into four quadrants. A line including a flat surface may be extended until it intersects one of the imaginary lines. The angle between the flat surface and the imaginary line can then be measured.

Accordingly, as shown in FIG. 2, imaginary lines X and Y have been drawn dividing the blade clamp 13 into four quadrants AA, BB, CC and DD. Preferably, quadrants AA and CC are minor images of each other about the X-Y intersection point. Similarly, quadrants BB and DD are also preferably mirror images of each other about the X-Y intersection point.

If the line including the flat surface 151 (preferably found in quadrants AA and CC) is extended until it intersects line X, angle A is formed therebetween. Similarly, if the line including the flat surface 152 (preferably found in quadrants BB and DD) is extended until it intersects line X, angle C is formed therebetween. Further, if the lines including the flat surfaces 153, 154 (preferably found in quadrants AA and CC) are extended until they intersect line Y, angles D and B are respectively formed therebetween.

The length of flat surfaces 151, 152, 153, 154 may be about at least 0.5 millimeters. Preferably the length of flat surfaces 151, 152, 153, 154 are about 12 millimeters, about 9 millimeters, about 2-3 millimeters, and about 5-6 millimeters, respectively. Preferably, the angles A, B, C, and D are 37°, 53°, 29° and 61°, respectively. The radius R may be about 19.9 millimeters.

As shown in FIG. 3, the blade hole 10H may have a perimeter similar to that of the drive surface 15. Accordingly, blade hole 10H may have a substantially circular perimeter having a radius R', with "wing" extensions extending therefrom. The extensions preferably have linear or flat surfaces. The angles of these flat surfaces can be measured in several different manners. For example, two imaginary lines perpendicular to each other may be drawn to divide the blade hole 10H into four quadrants. A line including a flat surface may be extended until it intersects one of the imaginary lines. The angle between the flat surface and the imaginary line can then be measured.

Accordingly, as shown in FIG. 3, imaginary lines X' and Y' have been drawn dividing the blade hole 10H into four quadrants AA', BB', CC' and DD', preferably in a similar manner as and/or relatively aligned to lines X and Y. Preferably, quadrants AA' and CC' are mirror images of each other about the X'-Y' intersection point. Similarly, quadrants BB' and DD' are also preferably mirror images of each other about the X'-Y' intersection point.

If the line including the flat surface 251 (preferably found in quadrants AA' and CC') is extended until it intersects line X', angle A 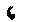 is formed therebetween. Similarly, if the line including the flat surface 252 (preferably found in quadrants BB' and DD') is extended until it intersects line X', angle C' is formed therebetween. Further, if the lines including the flat surfaces 253, 254 (preferably found in quadrants AA' and CC') are extended until they intersect line Y', angles D' and B' are respectively formed therebetween.

The length of flat surfaces 251, 252, 253, 254 may be about at least 0.5 millimeters. Preferably the length of flat surfaces 151, 152, 153, 154 are about 13 millimeters, about 9 millimeters, about 3 millimeters, and about 6 millimeters, respectively. Preferably, the angles A, B, C, and D are 35°, 53°, 29° and 59°, respectively. The radius R' may be about 20.0 millimeters.

Persons skilled in the art may recognize that some of the lengths of the flat surfaces (and radius) of blade hole 10H are slightly larger than the lengths of the corresponding flat surfaces (and radius) of the drive surface 15. This difference has been provided so that the drive surface 15 can be inserted into blade hole 10H.

Persons skilled in the art will also recognize that some of the angles of the flat surfaces of blade hole 10H are slightly smaller than the angles of the corresponding flat surfaces of the drive surface 15. This difference has been provided in order to allow the drive surface 15 to rotate prior to contacting the blade hole 10H.

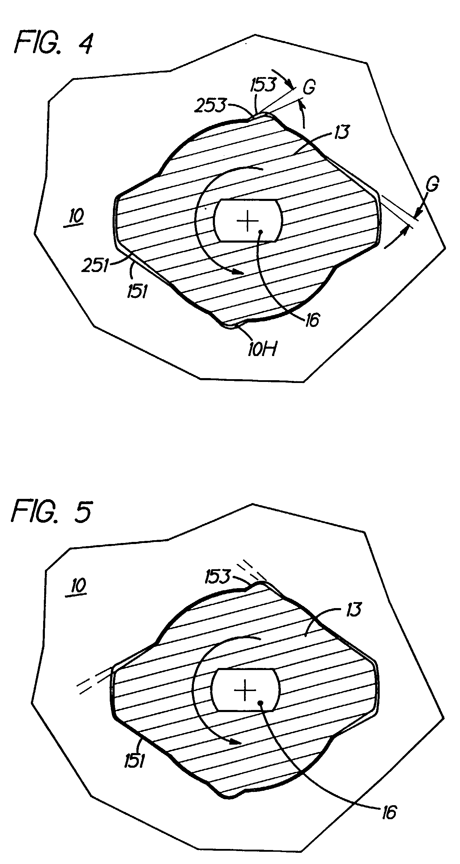

As shown in FIG. 4, if the blade 10 is installed on blade clamp 13, a gap G is formed between surfaces 151 and 251 and surfaces 153 and 253. Preferably gap G is the same for both pairs of surfaces, in order to ensure simultaneous contact of surfaces 151, 153 against corresponding surfaces 251, 253, respectively. This gap G is created by the difference in angles of the surfaces. This difference in angles may be more than about 0.05°, thus allowing the drive surface 15 to rotate 0.05° before closing gap G and/or contact of surfaces 151, 153 against corresponding surfaces 251, 253, respectively. It is preferable that the difference between the angles is about 2°, thus allowing the drive surface 15 to rotate 2° before closing gap G and/or contact of surfaces 151, 153 against corresponding surfaces 251, 253, respectively.

Upon rotation of blade clamp 13 (and thus of drive surface 15), the surfaces 151/251 and 153/253 align and contact each other over a substantial length, as shown in FIG. 5. Preferably, the substantial length is more than about 0.5 millimeters. Persons skilled in the art will recognize that it is preferable to maximize the contact length in order to minimize stripping of blade hole 10H and/or drive surface 15.

Persons skilled in the art will recognize that both blade hole 10H and drive surface 15 are preferably asymmetrical about any axis substantially perpendicular to the rotational axis, so that the blade 10 can be installed for use in only one rotational direction. In other words, a user cannot take the blade 10 off the arbor 11, rotate it 180° about an axis perpendicular to the rotational axis and install it on the arbor 11.

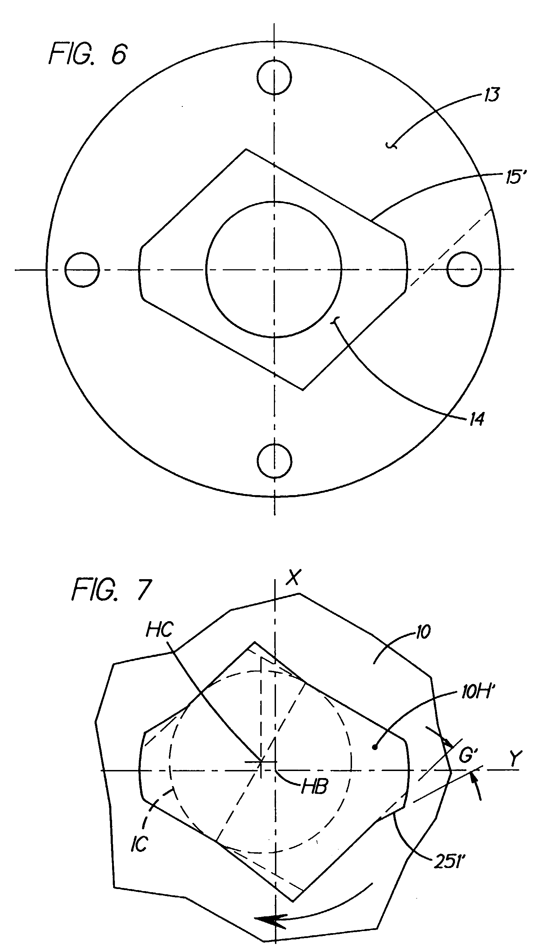

A second embodiment of the invention is shown in FIGS. 6-7, where like numerals refer to like parts. As shown in FIG. 6, blade clamp 13 has a raised surface 14 defining a drive surface 15'. Unlike the drive surface 15 described above, drive surface 15', preferably has a polygonal perimeter, without any curves. Similarly, blade 10 has a blade hole 10H' with a polygonal perimeter, without any curves.

Again, it is preferable that drive surface 15' and blade hole 10H' do not exactly match, in order to allow for rotation of the drive surface 15' prior to contacting blade hole 10H'. As shown in FIG. 7, this is achieved by providing blade hole 10H' with different flat surfaces, such as surface 251', having angles relative to lines X-Y that are smaller than the corresponding angles in drive surface 15'. As explained above, such misalignment creates a gap G' that allows for rotation of drive surface 15' prior to contacting blade hole 10H'.

Another feature of the blade hole 10H' is that the perimeter can be designed so that the blade 10 cannot be improperly disposed on a round arbor. As is well known in the art, any blade can be installed on a round arbor so long as the arbor (or a round sleeve installed on the arbor) contacts the blade hole on at least three different points. As shown in FIG. 7, an imaginary arbor IC has been drawn in blade hole 10H'. The imaginary arbor IC has a center HC. By designing the blade hole so that the center HC is eccentric from, i.e., not coincident with, the center HB of blade 10, any rotational movement of blade 10 will create a noticeable off balance situation, resulting in cuts rougher than desired. Such design thus discourages users from disposing the blade 10 on a round arbor.

Persons skilled in the art will also recognize that both the drive surface 15' and blade hole 10H' are preferably asymmetrical about any axis substantially perpendicular to the rotational axis, so that the blade 10 can be installed for use in only one rotational direction. In other words, a user cannot take the blade 10 off the arbor 11, rotate it 180° about an axis perpendicular to the rotational axis and install it on the arbor 11.

Persons skilled in the art should also recognize that the discussion on the two above embodiments assumes that the blade is dissected along parallel planes substantially perpendicular to the axis of rotation and each plane being about a point wide. Such assumption was made in order to simplify the description of the present invention. In practice, it is preferable to maximize the surface contact area, i.e., the area of contact between a blade hole surface and a drive surface. By maximizing surface contact area, the pressure against the blade hole or the drive surface is reduced, thus reducing stripping.

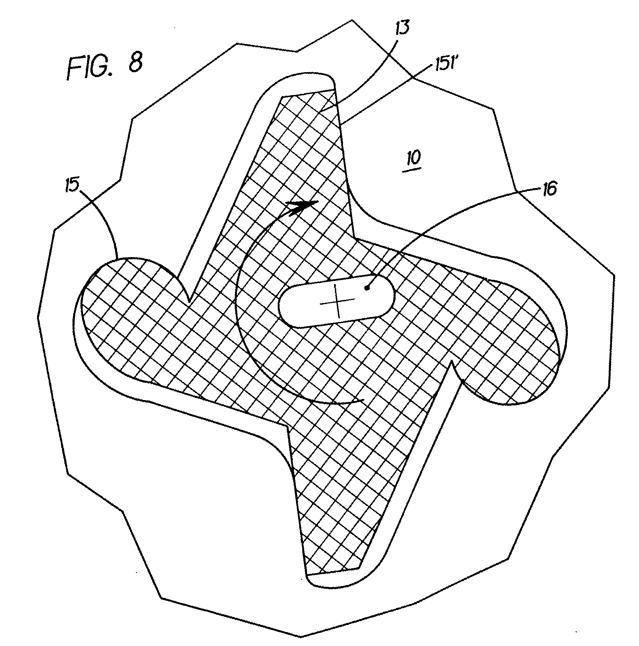

Persons skilled in the art may recognize other alternatives to the means disclosed herein. For example, instead of the drive surface having flat surfaces contacting flat surfaces on the blade hole, the drive surface may have curved surfaces that contact curved surfaces on the blade hole. In other words, persons skilled in the art will recognize that the same functionality obtained by the embodiments described above may be achieved with other blade holes or drive surfaces shaped differently and thus having different aesthetic appearances, as evidenced for example in FIG. 8. However, all these additions and/or alterations are considered to be equivalents of the present invention.

## Claims

1. A power tool comprising:
a motor;
an arbor driven by the motor;
a blade disposed on the arbor and having a rotational axis, the blade further having a hole;
first and second clamps connected to the arbor and clamping the blade;
at least one of the first and second clamps and arbor have a drive surface for contacting at least part of the hole perimeter, the drive surface having a different shape than the hole,
the drive surface having a segment, which in a first position does not contact a segment of the hole, and which in a second position upon rotation of the arbor, contacts a substantial length of the segment of the hole.

2. The power tool of Claim 1, wherein the hole has a perimeter asymmetrical relative to an axis substantially perpendicular to the rotational axis.

3. The power tool of Claim 1, wherein the hole has a flat segment on the perimeter.

4. The power tool of Claim 3, wherein the drive surface has a flat segment which in a first position is nonparallel to the flat segment of the hole, and which in a second position upon rotation of the arbor contacts a length of the flat segment of the hole.

5. The power tool of Claim 1, wherein the drive surface is asymmetrical relative to an axis substantially perpendicular to the rotational axis.

6. The power tool of Claim 1, wherein the shape of the hole has no curves.

7. The power tool of Claim 1, wherein the first clamp is integral with the arbor.

8. The power tool of Claim 1, wherein the hole receives the arbor therethrough.

9. The power tool of Claim 1, wherein a circle contacting three points of the hole has an axis eccentric from the rotational axis.

10. The power tool of Claim 1, wherein the substantial length is equal to or more than about 0.5 millimeters.

11. A blade having a rotational axis comprising:
a main body;
a hole formed within the main body for receiving a drive surface;
wherein the drive surface has a different shape than the hole, and a segment, which in a first position does not contact a segment of the hole, and which in a second position upon rotation of the drive surface contacts a substantial length of the segment of the hole.

12. The blade of Claim 11, wherein the hole has a perimeter asymmetrical relative to an axis substantially perpendicular to the rotational axis.

13. The blade of Claim 11, wherein the hole has a flat segment on its perimeter.

14. The blade of Claim 13, wherein the drive surface has a flat segment which in a first position is nonparallel to the flat segment of the hole, and which in a second position upon rotation of the drive surface contacts a length of the flat segment of the hole.

15. The blade of Claim 11, wherein the drive surface is asymmetrical relative to an axis substantially perpendicular to the rotational axis.

16. The blade of Claim 11, wherein the shape of the hole has no curves.

17. The blade of Claim 11, wherein a circle contacting three points of the hole has an axis eccentric from the rotational axis.

18. The blade of Claim 11, wherein the substantial length is equal to or more than about 0.5 millimeters.

19. A drive mechanism for driving a blade having a rotational axis, the blade further having a hole, the drive mechanism comprising:
a main body;
a drive surface on said main body for contacting a perimeter of the hole, and having a different shape than the hole, the drive surface further having a segment, which in a first position does not contact a segment of the hole, and which in a second position upon rotation of the drive surface contacts a substantial length of the segment of the hole.

20. The drive mechanism of Claim 19, wherein the hole has a perimeter asymmetrical relative to an axis substantially perpendicular to the rotational axis.

21. The drive mechanism of Claim 19, wherein the hole has a flat segment on the perimeter.

22. The drive mechanism of Claim 21, wherein the drive surface has a flat segment which in a first position is nonparallel to the flat segment of the hole, and which in a second position upon rotation of the arbor contacts a length of the flat segment of the hole.

23. The drive mechanism of Claim 19, wherein the drive surface is asymmetrical relative to an axis substantially perpendicular to the rotational axis.

24. The drive mechanism of Claim 19, wherein the shape of the hole has no curves.

25. The drive mechanism of Claim 19, wherein the main body is driven by a motor.

26. The drive mechanism of Claim 19, wherein a circle contacting three points of the hole has an axis eccentric from the rotational axis.

27. The drive mechanism of Claim 19, wherein the substantial length is equal to or more than about 0.5 millimeters.

28. A power tool comprising:
a motor;
an arbor driven by the motor;
a blade disposed on the arbor and having a rotational axis, the blade further having a hole;
a coacting clamp adapted to connect said blade to said arbor, said clamp having a drive surface adapted to engage at least part of the blade hole, wherein the drive surface has a different shape than the blade hole.

29. The power tool of Claim 28, wherein the drive surface is partially rotatable within said blade hole between a disengaged position not contacting said part of said blade hole and an engaged position contacting said part of said blade hole for driving said blade.

30. The power tool of Claim 29, wherein the drive surface is rotatable at least about 0.05° between said disengaged and engaged positions.

31. The power tool of Claim 29, wherein the drive surface is rotatable at least about 2° between said disengaged and engaged positions.

32. A power tool comprising:
a motor;
an arbor driven by the motor;
a blade disposed on the arbor and having a rotational axis, the blade further having a hole;
a coacting clamp adapted to connect said blade to said arbor, said clamp having a drive surface adapted to engage at least part of the blade hole, wherein the drive surface is partially rotatable within said blade hole between a disengaged position not contacting said part of said blade hole and an engaged position contacting said part of said blade hole for driving said blade.

33. The power tool of Claim 32, wherein the drive surface has a different shape than the blade hole.

34. The power tool of Claim 32, wherein the drive surface is rotatable at least about 0.05° between said disengaged and engaged positions.

35. The power tool of Claim 32, wherein the drive surface is rotatable at least about 2° between said disengaged and engaged positions.
